# EUROPEAN PATENT APPLICATION

(11) **EP 4 636 049 A1**
(43) Date of publication of application: **22.10.2025**
(21) Application number: 23903441.6
(22) Date of filing: 08.12.2023
(51) Int. Cl.: C09D 201/00, C09D 5/02, C09D 123/08, C09D 133/06

(54) **AQUEOUS COMPOSITION FOR SCREW-MEMBER COATING, AND SCREW MEMBER**

(30) Priority: 14.12.2022 JP 2022199774
(71) Applicant: ThreeBond Co., Ltd., Tokyo 192-0398 (JP)
(72) Inventor: SOGA, Tetsunori, Hachioji-shi, Tokyo 192-0398 (JP); NIWA, Masayuki, Hachioji-shi, Tokyo 192-0398 (JP)
(74) Representative: Crow, Martin
(86) International application number: PCT/JP2023/044018
(87) International publication number: WO 2024/128154

(57) **Abstract**

An object of the present invention is to provide an aqueous composition for coating a threaded member that can attain high visibility while being an aqueous composition. The aqueous composition for coating a threaded member contains component (A): an aqueous binder; and component (B): an aqueous emulsion containing a fluorescent pigment and having a surface tension of 15.5 to 80 mN/m.

## Description

### TECHNICAL FIELD

The present invention relates to an aqueous composition for coating a threaded member and a threaded member.

### BACKGROUND ART

Conventionally, a composition for the purpose of locking, adhering, or sealing, which is used by being applied in advance to a threaded surface of a threaded member such as a screw, a bolt, or a nut. For example, Patent Literature 1 discloses an anti-loosening agent composition in the form of an aqueous dispersion containing a microcapsule, in which an epoxy resin or the like as a reactive adhesive is encapsulated; and a liquid or semisolid polyamide containing a free amino group, which acts as a curing agent and also as a binder for the microcapsule.

When pigments are added to the above-described composition, the composition may be colored in various colors. For example, when titanium oxide is added as a pigment, the composition may be colored white. As described above, variation in color for each grade of the composition (processing fluid) and each processed product enhances distinguishability and, therefore, shows effects of improving the work efficiency of the worker and reducing work errors, such as mishandling.

### Citation List

### Patent Literatures

Patent Literature 1: JP 2003-194032 A

### SUMMARY OF INVENTION

However, conventional aqueous compositions for coating a threaded member have been found to lack excellent visibility.

Accordingly, an object of the present invention is to provide an aqueous composition for coating a threaded member that can impart excellent visibility.

The present invention, based on intensive studies made to achieve the above object, attain high visibility while being an aqueous composition by using a curable composition with the following constitution. As used herein, the aqueous composition means a composition in which 50 mass% or more of the solvent is water.

That is,
[1] An aqueous composition for coating a threaded member, comprising an aqueous binder as component (A) and an aqueous emulsion-type fluorescent pigment having a surface tension of 15.5 to 80 mN/m as component (B).
[2] The aqueous composition for coating a threaded member according to [1], wherein the component (B) is an aqueous emulsion-type organic fluorescent pigment composed of a resin particle containing a substance that emits fluorescent green or fluorescent blue light.
[3] The aqueous composition for coating a threaded member according to [1] or [2], wherein the component (A) is at least one selected from the group consisting of (meth)acrylic polymer emulsion, a (meth)acrylic-styrene copolymerized emulsion, and an ethylene-vinyl acetate copolymer emulsion.
[4] The aqueous composition for coating a threaded member according to any one of [1] to [3], further comprising a non-fluorescent colorant as component (C).
[5] The aqueous composition for coating a threaded member according to any one of [1] or [4], further comprising a microcapsule encapsulating a curable compound as component (D).
[6] The aqueous composition for coating a threaded member according to [5], further comprising a microcapsule encapsulating a curing agent as component (E).
[7] The aqueous composition for coating a threaded member according to any one of [1] to [6], wherein an amount of solids of the component (B) of the present invention added is 0.05 to 10 parts by mass relative to 10 parts by mass of solids of the component (A).
[8] A cured product, which is obtained by drying or curing the aqueous composition for coating a threaded member according to any one of [1] to [7].
[9] A threaded member coated with the aqueous composition for coating a threaded member according to any one of [1] to [8].

The present invention also encompasses aspects and modes described below.

1. An aqueous composition for coating a threaded member, comprising: component (A): an aqueous binder; and component (B): an aqueous emulsion containing a fluorescent pigment and having a surface tension of 15.5 to 80 mN/m.
2. The aqueous composition for coating a threaded member according to 1., wherein the component (B) is an aqueous emulsion comprising a resin particle containing a substance that emits fluorescent green or fluorescent blue light.
3. The aqueous composition for coating a threaded member according to 1. or 2., wherein the component (A) is at least one selected from the group consisting of a (meth)acrylic polymer emulsion, a (meth)acrylic-styrene copolymer emulsion, and an ethylene-vinyl acetate copolymer emulsion.
4. The aqueous composition for coating a threaded member according to any one of 1. to 3., further comprising component (C): a non-fluorescent colorant.
5. The aqueous composition for coating a threaded member according to any one of 1. to 4., further comprising component (D): a microcapsule encapsulating a curable compound.
6. The aqueous composition for coating a threaded member according to 5., further comprising component (E): a microcapsule encapsulating a curing agent.
7. The aqueous composition for coating a threaded member according to any one of 1. to 6., wherein an amount of solids of the component (B) added is 0.05 to 10 parts by mass relative to 10 parts by mass of solids of the component (A).
8. The aqueous composition for coating a threaded member according to any one of 1. to 7., wherein the component (B) has a viscosity of 14 mPa·s or more.
9. The aqueous composition for coating a threaded member according to 8., wherein the component (B) has a pH of 5.15 to 5.30.
10. The aqueous composition for coating a threaded member according to any one of 1. to 9., comprising talc and mica.
11. The aqueous composition for coating a threaded member according to 10., wherein a mass content of the talc is 1.2 to 4.0 times a mass content of the mica.
12. A cured product, which is obtained by drying and/or curing the aqueous composition for coating a threaded member according to any one of 1. to 11.
13. A threaded member at least partially coated with the aqueous composition for coating a threaded member according to any one of 1 to 12.
14. A threaded member at least partially coated with the cured product according to 12.
15. An aqueous composition for coating a threaded member, which is obtained by mixing component (A): an aqueous binder with component (B): an aqueous emulsion containing a fluorescent pigment and having a surface tension of 15.5 to 80 mN/m.

### DESCRIPTION OF EMBODIMENTS

Hereinafter, the present invention is described in detail. In the present specification, the expression "X to Y" is used to indicate that numerical values (X and Y) described before and after "to" are included as the lower limit value and the upper limit value and meant by "X or more and Y or less". When a plurality of "X to Y" are described, for example, "X1 to Y1, or X2 to Y2", the disclosure of each numerical value as the upper limits, the disclosure of each numerical value as the lower limits, and the disclosure of the combination of those upper and lower limits are all included (i.e., the lawful basis for the amendment). Specifically, the amendment to X1 or more, amendment to Y2 or less, amendment to X1 or less, amendment to Y2 or more, amendment to X1 to X2, amendment to X1 to Y2, or the like should all be considered legal. Two or more components forming the composition may be included in the composition in combination unless otherwise specified, and the description of the amount used, the amount added, and the like may mean the total amount thereof when two or more components are combined. In addition, if the present disclosure is described in terms of a Markush group, those skilled in the art will recognize that the present disclosure is thereby described in terms of any individual component or subgroup of components of the Markush group. Unless otherwise specified, the operation and the measurement of physical properties and the like are performed under the conditions of room temperature (20 to 25°C)/relative humidity of 40 to 55% RH.

One aspect of the present invention is an aqueous composition for coating a threaded member comprising component (A): an aqueous binder; and component (B): an aqueous emulsion containing a fluorescent pigment and having a surface tension of 15.5 to 80 mN/m. Such a constitution attains high visibility in spite of an aqueous composition.

The present invention can provide an aqueous composition for coating a threaded member that can attain high visibility while being an aqueous composition. In the present specification, the "aqueous composition for coating a threaded member" may be simply referred to as a "composition". Note that the aqueous composition for coating a threaded member is roughly classified into a non-curable composition and a curable composition. A non-curable composition is a composition that does not contain a curable compound, while a curable composition is a composition that contains a curable compound. Specifically, a curable composition may be formed by including, for example, a microcapsule encapsulating a curable compound serving as component (D) described below and a microcapsule encapsulating a curing agent which reacts with the curable compound contained in the microcapsule of the component (D) as component (E).

### <Component (A)>

The aqueous composition for coating a threaded member of the present invention contains component (A).

The component (A) of the present invention is an aqueous binder. The component (A) is preferably, but not particularly limited to, a (meth)acrylic polymer emulsion, a (meth)acrylic-styrene copolymer emulsion, an ethylene-vinyl acetate copolymer emulsion, or the like, especially a (meth)acrylic-styrene copolymer emulsion because an aqueous composition for coating a threaded member that can further attain high visibility with excellent fixing force while being an aqueous composition can be obtained by combining the component (A) with another component of the present invention. Since the component (A) is capable of remarkably reducing the environmental load, water may be used as a solvent. These can be used alone or in a mixture of two or more thereof. The mass ratio of the solid content to water in the component (A) is preferably 1:99 to 99:1, more preferably 20:80 to 70:30. According to one embodiment of the present invention, the mass ratio of the solid content to water in the component (A) is 30:70 to 60:40, 35:65 to 55:45, or 35:65 to 48:52.

Examples of commercially available products of the (meth)acrylic polymer emulsion include, but are not limited to, JURYMER AC-10S and JURYMER AS-10SH (manufactured by Toagosei Co., Ltd.); ACRYSET ARL-468, and ACRYSET ARL-460 (manufactured by Nippon Shokubai Co., Ltd.); Polysol AP-1761, Polysol AP-5595N, and Polysol AP-4690N (manufactured by Showa Denko K.K., currently known as Resonac Holdings Corporation); Newcoat SFK-1000A, Newcoat SFK-8000A, and Newcoat KSB-1 (manufactured by Shin-Nakamura Chemical Co., Ltd.); Mowinyl 727, Mowinyl 7525, and Mowinyl 745 (manufactured by Nippon Synthetic Chemical Industry Co., Ltd.); and ACRONAL 7064 (manufactured by BASF Japan Ltd.). Examples of commercially available products of the (meth)acryl-styrene copolymer emulsion include, but are not limited to, Polysol AP-6750 and AP-3160A (manufactured by Showa Highpolymer Co., Ltd., currently known as Resonac Holdings Corporation), VONCOAT4280 (manufactured by DIC Corporation); and ACRONAL YS-756ap, YS-800ap, PDX-7430, and YJ2741Dap (manufactured by BASF Japan Ltd.). Examples of commercially available products of the ethylene-vinyl acetate copolymer emulsion include, but are not limited to, Sumikaflex 410HQ and 408HQE (manufactured by Sumika Chemtex Co., Ltd.); and Polysol EVA EL-851 (manufactured by Showa Highpolymer Co., Ltd., currently known as Resonac Holdings Corporation).

According to one embodiment of the present invention, the (meth)acrylic-styrene copolymer (when formed into a cured product) has a glass transition temperature (theoretical glass transition temperature calculated from the FOX equation) of 5 to 30°C or 10 to 20°C.

The amount of solids of the component (A) added in the present invention is preferably 0.5 to 50 mass%, more preferably 1 to 30 mass%, and particularly preferably 3 to 20 mass% relative to the total composition. According to one embodiment of the present invention, the amount of solids of the component (A) added is 3.5 to 15 mass%, 3.7 to 11 mass%, 4 to 10 mass%, 4.5 to 9 mass%, or 5 to 8 mass% relative to the total composition. An aqueous composition for coating a threaded member that can attain even higher visibility with excellent fixing force while being an aqueous composition can be obtained when the amount falls within the above range. In the present specification, the solid content means a residue obtained after removal of a volatile component, and the residue may be solid or liquid at normal temperature.

### <Component (B)>

The aqueous composition for coating a threaded member of the present invention contains component (B).

The component (B) of the present invention is an aqueous emulsion containing a fluorescent pigment and having a surface tension of 15.5 to 80 mN/m. In combination with the other components of the present invention, the component (B) shows a remarkable effect of attaining high visibility, although the composition is aqueous. The surface tension of the component (B) is preferably 16.0 to 50 mN/m, particularly preferably 16.5 to 30 mN/m. According to one embodiment of the present invention, the surface tension of the component (B) is 16.0 to 24.0 mN/m, 16.1 to 23.0 mN/m, 16.2 to 20.0 mN/m, 16.3 to 19.0 mN/m, or 16.4 to 18.0 mN/m. Within such a range, the fluorescent color is enhanced. When the composition contains a microcapsule encapsulating a curable compound, the cured product may have an increased fixing force. Examples of a method of measuring the "surface tension" include a plate method, a ring method, a hanging drop method, and a maximum bubble pressure method. Preferred is a plate method. Specifically, the static surface tension is preferably measured by a plate method (e.g., a platinum plate method) using a DY series (such as DY-200 or DY-300) of automatic surface tensiometers manufactured by Kyowa Interface Science Co., Ltd. in an environment of 25°C and a relative humidity of 55% RH.

Specific examples of the component (B) include an aqueous emulsion including a resin particle containing a substance (organic fluorescent pigment) that emits fluorescent green or fluorescent blue light. According to one embodiment of the present invention, the substance that emits fluorescent green preferably has a peak of an emission spectrum in a range of wavelengths of 490 to 575 nm (preferably 490 to 570 nm, 490 to 560 nm, or 490 to 550 nm). The substance that emits fluorescent blue preferably has a peak of an emission spectrum in a range of wavelengths of 425 nm or more and less than 490nm (preferably 430 nm or more and less than 490 nm).

Since the component (B) is capable of remarkably reducing the environmental load, water may be used as a solvent. These can be used alone or in a mixture of two or more thereof. The mass ratio of the solid content to water in the component (B) is preferably 1:99 to 99:1, more preferably 20:80 to 70:30. According to one embodiment of the present invention, the mass ratio of the solid content to water in the component (B) is 30:70 to 60:40 or 35:65 to 55:45.

The average particle size of the resin particles contained in the component (B) is preferably 0.01 to 50 µm, more preferably 0.05 to 20 µm, although not limited thereto. According to an embodiment of the present invention, the average particle size of the resin particles in the component (B) is 0.06 to 10 µm, 0.07 to 5 µm, 0.07 to 1 µm, or 0.08 to 0.5 µm. Note that the "average particle size" refers to an average particle size measured with a laser analytical particle size distribution analyzer or an electron microscope.

According to one embodiment of the present invention, the resin particle is preferably a styreneacrylonitrile-acrylic acid polymer, a methyl methacrylate-methacrylonitrile polymer, a methyl methacrylate-acrylonitrile-glycidyl methacrylate polymer, a styrene-methyl methacrylate-methacrylonitrile-methacrylic acid polymer, or the like.

Examples of the substance that emits fluorescent green or fluorescent blue light in the component (B) include 3-(2-quinolylmethylene)isoindolin-1-one), and examples of the compound that emits fluorescent blue include cobalt aluminate. Examples of the substance that emits fluorescent green include manganese-activated zinc-silicate phosphor (Zn₂SiO₄:Mn), copper-activated zinc-sulfide phosphor (ZnS:Cu), copper-and aluminum-activated zinc-sulfide phosphor (ZnS:Cu, Al), copper-activated zinc-cadmium sulfide ([(Zn, Cd)S:Cu]), zinc-activated zinc-oxide phosphor (ZnO:Zn), copper-activated zinc-cadmium-sulfide phosphor [(Zn, Cd)S:Cu]), titanium-activated calcium-magnesium-silicate phosphor [(Ca, Mg)SiO₃:Ti], silver-activated zinc-sulfo-selenide phosphor [Zn(S, Se):Ag], ZnS:Cu, Cl, Au, ZnS:Cu, Cl, Al, ZnS:Cu, Cl, Zn₂SiO₄:Mn, Y₂SiO₅:Tb, (Zn, Cd)S:Cu, Al, Y₃Al₅O₁₂:Tb, and Y₂O₂S:Tb.

Even when the component (B) literally corresponds to an organic pigment or an inorganic pigment of the component (C) described later, the component (B) is treated as the component (B) in a case where the component (B) develops fluorescence.

According to one embodiment of the present invention, the pH of the aqueous emulsion that forms the composition and has a surface tension of 15.5 to 80 mN/m is preferably 3.00 to 7.00, 3.50 to 6.50, 4.00 to 6.00, 4.50 to 5.50, 5.00 to 5.40, or 5.15 to 5.30. An appropriate pH of the component (B) significantly increases the fixing force, which can be measured with a commercially available pH meter, for example, a pH meter D54 manufactured by HORIBA, Ltd.

According to one embodiment of the present invention, the viscosity of the aqueous emulsion that forms the composition and has a surface tension of 15.5 to 80 mN/m is 10 to 20 mPa·s, 12 to 18 mPa·s, 14 to 18 mPa·s, or 16 to 18 mPa·s. According to one embodiment of the present invention, the viscosity of the aqueous emulsion that forms the composition and has a surface tension of 15.5 to 80 mN/m is 14 mPa·s or more. An appropriate viscosity of the component (B) significantly increases the fixing force, which can be measured with, for example, a B-type or E-type (preferably B-type) rotational viscometer. As the B-type rotational viscometer, a UL low viscosity adapter (attached to a spindle) can be used in a Brookfield digital viscometer (model: DV1M, product name: LVDV1M). Note that the viscosity is a value measured at 25°C.

Examples of commercially available products of the component (B) include, but are not particularly limited to, MLCB12 and MLCB18 (manufactured by Shinloihi Co., Ltd.).

The amount of solids of the component (B) added in the present invention is preferably 0.05 to 10 parts by mass, more preferably 0.07 to 5 parts by mass, and particularly preferably 0.1 to 3 parts by mass relative to 10 parts by mass of solids of the component (A). According to one embodiment of the present invention, the amount of solids of the component (B) added is 0.1 to 2 parts by mass or 0.2 to 1 parts by mass relative to 10 parts by mass of solids of the component (A).

The solid content of the component (B) is preferably 0.01 to 20 mass%, more preferably 0.03 to 10 mass%, and particularly preferably 0.05 to 5 mass% relative to the total composition. According to one embodiment of the present invention, the solid content of the component (B) is 0.05 to 4 mass%, 0.06 to 3 mass%, 0.07 to 2 mass%, 0.08 to 1 mass%, 0.09 to 0.8 mass%, 0.1 to 0.6 mass%, or 0.1 to 0.4 mass% relative to the total composition. An aqueous composition for coating a threaded member that can attain even higher visibility with excellent fixing force while being an aqueous composition can be obtained when the solid content of the component (B) falls within the above range. In the present specification, the solid content means a residue obtained after removal of a volatile component, and the residue may be solid or liquid at normal temperature.

According to one embodiment of the present invention, the proportion of the substance that emits fluorescent green or fluorescent blue light in the solid content of the component (B) may be 0.99 to 1.96 mass%.

### <Component (C)>

The aqueous composition for coating a threaded member of the present invention may contain component (C).

Furthermore, the component (C), which can be used in the present invention, is a non-fluorescent colorant. When a non-fluorescent colorant is contained in the aqueous emulsion (component (B)) containing fluorescent pigments and having a surface tension of 15.5 to 80 mN/m, the non-fluorescent colorant (component (C)) may exclude solids of the component (B).

In the present invention, a coloring can be confirmed under fluorescent light or natural light environments by using the component (C). In the case of using the component (B), a coloring can be confirmed under a UV irradiation environment. Even when the components (B) and (C) of the present invention are used in combination, each of them does not interfere with coloring, making it possible to obtain a coating with different colors under fluorescent light and UV irradiation environments. The "non-fluorescent" of the component (C) means that the component (C) does not develop (emit) color upon irradiation with UV light (365 nm) (i.e., there is no peak in the emission spectrum).

The component (C) may be dispersed in a solvent such as an alcohol or a ketone, or a dispersion medium such as a plasticizer or water.

Examples of the component (C) include dyes and pigments, and examples of the pigments include organic pigments and inorganic pigments. Examples of the organic pigments include, but are not particularly limited to, isoindolinone, isoindoline, azomethine, perylene, dioxazine, phthalocyanines such as Pigments Blue-15 (also known as 29H, 31H, phthalocyanato(2-)-N29, N30, N31, and N32 copper) and Pigments Green-7 (polychlorophthalocyanine copper), permanent carmine FB, 1,4-bis[1'-(dichlorophenylazo)-2'-hydroxynaphthalene-3'-carbonylamino]benzene, and Solvent Yellow-16. Examples of the inorganic pigments include, but are not particularly limited to, carbon black, ultramarine, cobalt blue, iron oxides (diiron trioxide), and titanium oxides such as CI Pigments Green 50 (green spinel of cobalt titanate).

Among them, cobalt blue, ultramarine, and titanium oxide are preferable because of their excellent dispersibility in the component (A) of the present invention. These can be used alone or in a mixture of two or more thereof. As used herein, cobalt blue is known as a very stable pigment excellent in all of light resistance, weather resistance, acid resistance, and alkali resistance. The compositional formula is represented by CoAl₂O₄ (cobalt aluminate) or CoO·Al₂O₃ (spinel of cobalt oxide and aluminum oxide). Ultramarine is one of inorganic pigments whose constituent components are silicates of aluminum and sodium mixed with sulfide ions and sulfate ions, and occurs naturally as the main component of Lapis lazuli.

The component (C) of the present invention may contain a dispersion medium such as water, and the amount of solids of the component (C) added is preferably 0.05 to 10 parts by mass, more preferably 0.1 to 7 parts by mass, still more preferably 0.3 to 5 parts by mass, even more preferably 0.3 to 2 parts by mass, and yet still more preferably 0.3 to 1 part by mass relative to 10 parts by mass of solids of the component (A). An aqueous composition for coating a threaded member that can attain even higher visibility with excellent fixing force while being an aqueous composition can be obtained when the solid content of the component (C) falls within the above range.

### <Component (D)>

For the purpose of imparting curability to the aqueous composition for coating a threaded member of the present invention, a microcapsule containing a curable compound serving as the component (D) can be further contained, whereby direct contact between the curable compound and a substance capable of curing the curable compound can be avoided, and the storage stability of the aqueous composition for coating a threaded member can be ensured. The component (D) may be added to obtain an aqueous composition for coating a threaded member that can attain even higher visibility with excellent fixing force while being an aqueous composition.

Examples of the curable compound contained in the microcapsule of the component (D) include a (meth)acrylate compound (acrylic or methacrylic functional compound) or an epoxy compound. The curable compound is composed of one kind or a combination of two or more kinds thereof.

The (meth)acrylate compound is a (meth)acrylate having one or more (meth)acryloyl groups per molecule, and specific examples thereof include a (meth)acrylate oligomer and a (meth)acrylate monomer. The difference between the monomer and the oligomer is that the weight-average molecular weight (or molecular weight), which can be divided by 1000, of the monomer is 1000 or less. Since the aqueous composition for coating a threaded member of the present invention has excellent fixing force while being an aqueous composition, it preferably contains only a (meth)acrylate monomer.

Specific examples of the (meth)acrylate oligomer include an urethane-modified (meth)acrylate oligomer, and examples of the main structure thereof include, but are not limited to, bisphenol A, novolac phenol, polybutadiene, polyester, and polyether.

The urethane-modified (meth)acrylate oligomer is a compound having a urethane bond formed by reacting an isocyanate group with a hydroxy group, and a (meth)acryloyl group. The epoxy-modified (meth)acrylate oligomer may be synthesized by ring-opening polymerization of a glycidyl group of a polyfunctional glycidyl ether compound with (meth)acrylic acid or the like, although not limited thereto. The main chain of the polyfunctional glycidyl ether that can be used has various structures such as a bisphenol A-type, a bisphenol F-type, and a novolac phenol type.

The (meth)acrylate monomer may include a monofunctional (meth)acrylate monomer, a bifunctional (meth)acrylate monomer, or a trifunctional (meth)acrylate monomer. From the viewpoint of curability, the (meth)acrylate monomer preferably includes a bifunctional (meth)acrylate monomer or a trifunctional (meth)acrylate monomer, particularly preferably a bifunctional (meth)acrylate monomer. In addition, a plurality of other monomers can be used in combination.

Specific examples of the monofunctional (meth)acrylate monomer include, but are not limited to, lauryl (meth)acrylate, stearyl (meth)acrylate, ethylcarbitol (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, isobornyl (meth)acrylate, benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, nonylphenoxytetraethylene glycol (meth)acrylate, methoxydiethylene glycol (meth)acrylate, ethoxydiethylene glycol (meth)acrylate, butoxyethyl (meth)acrylate, butoxytriethylene glycol (meth)acrylate, 2-ethylhexyl polyethylene glycol (meth)acrylate, 4-hydroxybutyl (meth)acrylate, nonylphenyl polypropylene glycol (meth)acrylate, methoxydipropylene glycol (meth)acrylate, 2-hydroxyethyl (meth)acrylate, 2-hydroxypropyl (meth)acrylate, glycerol (meth)acrylate, polyethylene glycol (meth)acrylate, polypropylene glycol (meth)acrylate, epichlorohydrin-modified butyl (meth)acrylate, epichlorohydrin-modified phenoxy (meth)acrylate, N,N-dimethylaminoethyl (meth)acrylate, N,N-diethylaminoethyl (meth)acrylate, (meth)acryloyl acid, 3-(meth)acryloyloxypropylsuccinic acid, 4-(meth)acryloyloxybutylsuccinic acid, 2-(meth)acryloyloxyethylmaleic acid, 3-(meth)acryloyloxypropylmaleic acid, 4-(meth)acryloyloxybutylmaleic acid, 2-(meth)acryloyloxyethylhexahydrophthalic acid, 3-(meth)acryloyloxypropylhexahydrophthalic acid, 4-(meth)acryloyloxybutylhexahydrophthalic acid, 2-(meth)acryloyloxyethylphthalic acid, 3-(meth)acryloyloxypropylphthalic acid, 4-(meth)acryloyloxybutylphthalic acid, 2-ethylhexyl acid phosphate, and 2-hydroxyethyl methacrylate acid phosphate.

According to one embodiment of the present invention, the curable compound does not contain a monofunctional (meth)acrylate.

According to one embodiment of the present invention, the (meth)acrylate compound has a bisphenol structure. According to one embodiment of the present invention, the (meth)acrylate compound has an oxyalkylene group. The number of carbon atoms of the oxyalkylene group is preferably 1 to 4, 1 to 3, or 1 or 2. According to one embodiment of the present invention, the (meth)acrylate compound has two or three (meth)acryloyl groups, a bisphenol structure, and an oxyalkylene group.

According to one embodiment of the present invention, the (meth)acrylate compound has an alkyldiol di(meth)acrylate. The number of carbon atoms of alkyl in the alkyldiol di(meth)acrylate is preferably 1 to 11, 2 to 10, 3 to 9, 4 to 8, or 5 to 7.

Specific examples of the bifunctional (meth)acrylate monomer include, but are not limited to, 1,3-butylene glycol di(meth)acrylate, 1,4-butylene glycol di(meth)acrylate, tricyclodecane dimethanol di(meth)acrylate, neopentyl glycol di(meth)acrylate, 1,6-hexane glycol di(meth)acrylate (1,6-hexamethylene glycol di(meth)acrylate), ethylene glycol diacrylate, tetraethylene glycol di(meth)acrylate, polyethylene glycol di(meth)acrylate, propylene glycol di(meth)acrylate, tripropylene glycol di(meth)acrylate, dimethylol tricyclodecane di(meth)acrylate, ethylene oxide-modified neopentyl glycol di(meth)acrylate, propylene oxide-modified neopentyl glycol di(meth)acrylate, bisphenol A di(meth)acrylate, ethoxy-modified bisphenol A-type epoxy di(meth)acrylate, bisphenol F di(meth)acrylate, ethoxy-modified bisphenol F-type epoxy di(meth)acrylate, neopentyl glycol-modified trimethylolpropane di(meth)acrylate, dicyclopentenyl di(meth)acrylate, ethylene oxide-modified dicyclopentenyl di(meth)acrylate, and diacryloyl isocyanurate, among which it is preferable to use one or more of ethoxy-modified bisphenol A-type epoxy di(meth)acrylate, ethoxy-modified bisphenol F-type epoxy di(meth)acrylate, 1,6-hexane glycol di(meth)acrylate, and dimethylol tricyclodecane di(meth)acrylate because an aqueous composition for coating a threaded member having an excellent fixing force can be obtained while being an aqueous composition.

According to one embodiment of the present invention, a combination of two or more compounds is suitable as the curable compound in the component (D), and the combination may be any combination of the compounds listed above. Preferably, the curable compound in the component (D) includes a (meth)acrylate (d1) having a bisphenol structure and an oxyalkylene group and an alkyldiol di(meth)acrylate (d2). According to one embodiment of the present invention, the mass content ratio of (d1) to (d2) ((d1):(d2)) is preferably 30:70 to 70:30 or 40:60 to 60:40.

According to one embodiment of the present invention, the (meth)acrylate compound consists of bifunctional compounds.

Specific examples of the trifunctional (meth)acrylate monomer include, but are not limited to, trimethylolpropane tri(meth)acrylate, trimethylolpropane tri(meth)acrylate, pentaerythritol tri(meth)acrylate, EO-modified trimethylolpropane tri(meth)acrylate, PO-modified trimethylolpropane tri(meth)acrylate, ECH-modified trimethylolpropane tri(meth)acrylate, ECH-modified glycerol tri(meth)acrylate, and tris (acryloyloxyethyl) isocyanurate.

According to one embodiment of the present invention, the curable compound does not contain a trifunctional (meth)acrylate.

In a case where the curable compound has both a (meth)acryloyl group and an epoxy group, the curable compound is classified as a (meth)acrylate compound.

According to one embodiment of the present invention, 80 mass% or more, 90 mass% or more, 95 mass% or more, or 99 mass% or more of the curable compound is composed of the (meth)acrylate compound (upper limit: 100 mass%.). According to one embodiment of the present invention, 80 mass% or more, 90 mass% or more, 95 mass% or more, or 99 mass% or more of the curable compound is composed of a (meth)acrylate (d1) having a bisphenol structure and an oxyalkylene group and an alkyldiol di(meth)acrylate (d2).

As the epoxy compound, an epoxy resin having an epoxy group in the molecule is used. Examples of the epoxy compound include, but are not limited to, bisphenol A-type epoxy resin, bisphenol F-type epoxy resin, bisphenol S-type epoxy resin, bisphenol AD-type epoxy resin, hydrogenated bisphenol type epoxy resin, 1,2-butanediol diglycidyl ether, 1,3-butanediol diglycidyl ether, 1,4-butanediol diglycidyl ether, ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether, 1,4-cyclohexanedimethanol diglycidyl ether, phenol novolac type epoxy resin, cresol novolac type epoxy resin, N,N-diglycidyl-4-glycidyloxyaniline, 4,4'-methylenebis (N,N-diglycidylaniline), tetraglycidyldiaminodiphenylmethane, tetraglycidyl-m-xylylenediamine, naphthalene-type epoxy resin, 1,2-epoxy-3-tolyloxy propane, 1,4-butanediol diglycidyl ether, n-butyl glycidyl ether, allyl glycidyl ether, 2-ethylhexyl glycidyl ether, styrene oxide, phenyl glycidyl ether, cresyl glycidyl ether, p-sec-butylphenyl glycidyl ether, glycidyl methacrylate, t-butylphenyl glycidyl ether, diglycidyl ether, (poly)ethylene glycol glycidyl ether, butanediol glycidyl ether, trimethylolpropane triglycidyl ether, and 1,6-hexanediol diglycidyl ether.

As a substance constituting the microcapsule wall, a conventionally known substance can be used. Gelatin, aldehyde resin or urea resin are used. Examples of the aldehyde resin include a urea-formaldehyde resin and a melamine-formaldehyde resin, and examples of the urea resin include a polyurea resin and a polyurethane resin. Note that the mass ratio of the curable compound to the wall is not particularly limited, and is, for example, 95:5 to 10:90. According to one embodiment of the present invention, the mass ratio of the curable compound to the wall is 95:5 to 40:60, 95:5 to 60:40, or 95:5 to 70:30.

The average particle size of the microcapsules can be adjusted to a desired value by controlling the stirring speed, the stirring time, and the like. In the present invention, the average particle size is preferably 50 to 500 µm, more preferably 100 to 300 µm, and still more preferably 120 to 200 µm. An aqueous composition for coating a threaded member that having even more excellent fixing force while being an aqueous composition can be obtained when the average particle size falls within the above range. Note that the average particle size was determined by taking a photograph using a scanning electron microscope, measuring particle sizes thereof, and calculating the average of the particle sizes.

The component (D) can be produced using a known microencapsulation method, interfacial polymerization method, in-situ method, insolubilizing precipitation method, coacervation method, or the like. A method described in Japanese Patent Laid-Open No. 2000-15087 or the like may be used to produce the component (D), the disclosure of which is incorporated herein by reference in its entirety.

The amount of the component (D) in the present invention is preferably 5 to 95 mass%, more preferably 10 to 80 mass%, and particularly preferably 20 to 60 mass% relative to the total composition. In one embodiment of the present invention, the amount of the component (D) added is 25 to 55 mass%, 30 to 50 mass%, or 35 to 45 mass% relative to the total composition.

The amount of the component (D) added in the present invention is preferably 5 to 150 parts by mass, more preferably 15 to 100 parts by mass, and particularly preferably 30 to 80 parts by mass relative to 10 parts by mass of solids of the component (A). In one embodiment of the present invention, the amount of the component (D) added in the present invention is 40 to 75 parts by mass or 50 to 70 parts by mass relative to 10 parts by mass of solids of the component (A).

In addition, the amount of the curable compound included in the component (D) of the present invention added is preferably 3 to 130 parts by mass, more preferably 12 to 90 parts by mass, still more preferably 25 to 70 parts by mass, even more preferably 30 to 70 parts by mass, yet still more preferably 35 to 60 parts by mass, or yet even more preferably 40 to 50 parts by mass relative to 10 parts by mass of solids of the component (A). The amount of the component (D) may be adjusted within the above range to obtain an aqueous composition for coating a threaded member that can attain even higher visibility with excellent fixing force while being an aqueous composition.

### <Component (E)>

For the purpose of imparting curability to the aqueous composition for coating a threaded member of the present invention, a microcapsule encapsulating a curing agent that reacts with the curable compound contained in the microcapsule of the component (D) may be further contained as component (E). The curing agent is not limited as long as it cures the curable compound. When the curable compound is a (meth)acrylate compound, examples thereof include a peroxide, and when the curable compound is an epoxy compound, examples thereof include an amine compound, a thiol compound, and an imidazole compound, among which a peroxide is preferable. These can be used alone or in a mixture of two or more thereof.

When the curable compound used in (D) of the present invention is a (meth)acrylate compound, the component (E) includes a peroxide. Examples of the peroxide include hydroperoxides such as cumene hydroperoxide, t-butyl hydroperoxide, and p-menthane hydroperoxide; diallyl peroxides such as dicumyl peroxide, t-butylcumyl peroxide, and di-t-butyl peroxide; ketone peroxides such as methyl ethyl ketone peroxide, cyclohexane peroxide, and methylcyclohexane peroxide; diacyl peroxides such as benzoyl peroxide, lauroyl peroxide, and acetyl peroxide; and peroxyesters such as t-butyl peroxybenzoate, t-butyl peroxyacetate, and t-butyl peroxybenzoate. In particular, in the present invention, diacyl peroxides are preferable, and among them, benzoyl peroxide is preferable since it has an excellent fixing force even though it is an aqueous composition. These can be used alone or in a mixture of two or more thereof. According to one embodiment of the present invention, 80 mass% or more, 90 mass% or more, 95 mass% or more, or 99 mass% or more of the peroxide is composed of benzoyl peroxide (upper limit: 100 mass%).

When the curable compound used in (D) of the present invention is an epoxy compound, examples of the component (E) include chain aliphatic polyamines, cyclic aliphatic polyamines, aliphatic aromatic amines, aromatic amines, modified amines such as amine adducts, polyamide resins, imidazole compounds, mercaptan compounds, and acid anhydrides, among which mercaptan compounds are preferable. These can be used alone or in a mixture of two or more thereof.

Examples of the mercaptan compound include pentaerythritol tetrakis(3-mercaptobutyrate), pentaerythritol tetrakis (3-mercaptopropanoate), trimethylolpropane tris(3-mercaptobutyrate), trimethylolethane tris (3-mercaptobutyrate), and 1,3,5-tris(3-mercaptobutyloxyethyl)-1,3,5-triazine-2,4,6(1H, 3H, 5H)-trione.

The microcapsule of the component (E) may be produced by a known technique, such as interfacial polymerization, in-situ polymerization, insolubilization precipitation, or coacervation. In the present invention, a microcapsule produced by in-situ polymerization is particularly preferably used.

The production of the microcapsule can be carried out according to known conventional methods described in Japanese Patent Application Laid-Open No. 04-048926, Japanese Patent Application Laid-Open No. 53-84881, Japanese Patent Publication No. 52-18671, Japanese Patent Publication No. 44-27257, and the like, the entire contents of which are incorporated herein by reference. As the wall material of the microcapsule, a urea-formaldehyde resin, a melamine-formaldehyde resin, a polyurea resin, a polyurethane resin, or the like can be appropriately selected according to the purpose. The mass ratio of the curing agent to the wall is not particularly limited, but is, for example, 95:5 to 10:90.

The amount of the microcapsule encapsulating a curing agent of the component (E) added is preferably 0.1 to 95 mass%, more preferably 0.5 to 80 mass%, and particularly preferably 1 to 60 mass% relative to the total composition. According to one embodiment of the present invention, the amount of the microcapsule of the component (E) added is 1.2 to 50 mass%, 1.4 to 40 mass%, 1.6 to 30 mass%, 1.8 to 20 mass%, 2.0 to 10 mass%, 2.2 to 5 mass%, or 2.4 to 4 mass% relative to the total composition.

The amount of the capsule encapsulating a curing agent of the component (E) added is preferably 0.1 to 100 parts by mass, more preferably 0.5 to 50 parts by mass, and particularly preferably 1 to 25 parts by mass relative to 10 parts by mass of solids of the component (A). The amount of the component (E) added in the present invention is preferably 0.1 to 50 parts by mass, more preferably 0.3 to 20 parts by mass relative to 10 parts by mass of the component (D). According to one embodiment of the present invention, the amount of the component (E) added in the present invention is 1 to 10 parts by mass, 2 to 8 parts by mass, or 3 to 6 parts by mass relative to 10 parts by mass of the component (D).

In addition, the amount of the curable agent included in the component (E) of the present invention added is preferably 0.05 to 85 parts by mass, more preferably 0.4 to 45 parts by mass, still more preferably 0.6 to 22 parts by mass, even more preferably 0.8 to 18 parts by mass, yet still more preferably 1 to 13 parts by mass, or yet even more preferably 1.5 to 9 parts by mass or 2 to 6 parts by mass relative to 10 parts by mass of solids of the component (A). The amount of the component (E) may be adjusted within the above range to obtain An aqueous composition for coating a threaded member that can attain even higher visibility with excellent fixing force while being an aqueous composition.

### <Optional Component>

Furthermore, in the present invention, additives such as a solvent, a filler, a curing accelerator, a rust inhibitor, a surfactant, a plasticizer, a dispersant, an adhesion aid, a preservative, an antifoaming agent, a wetting agent, an emulsifier, a diluent, a pH adjuster, a viscoelasticity adjusting agent, and a rheology adjuster (rheology control agent) may be contained or may not be contained as long as the effects of the invention are not impaired.

In particular, when the aqueous composition for coating a threaded member of the present invention is applied to a threaded member, a combination of an appropriate filler and a viscoelasticity adjusting agent or a rheology control agent results in increasing fixing force and further improvement in the anti-loosening action after threaded fastening. The inappropriate selection of filler can adversely affect coloring and adhesion strength.

Examples of the solvent include, but are not limited to, water, alcohol, and N-methyl-2-pyrrolidone, among which water is preferable for use as a preferred solvent for the component (A) and component (B). The water is preferably ion-exchange water.

The amount of water added (including water in the components (A) and (B)) is, but not particularly limited to, 5 to 95 mass%, preferably 10 to 80 mass%, and particularly preferably 20 to 60 mass% relative to the total composition. The amount of water added may be adjusted within the above range to obtain an aqueous composition for coating a threaded member that can attain even higher visibility with excellent fixing force while being an aqueous composition. As used herein, the aqueous composition means a composition in which 50 mass% or more of the solvent is water. The solid content in the total composition is 5 to 95 mass%, preferably 20 to 90 mass%, and particularly preferably 40 to 80 mass%.

According to one embodiment of the present invention, 80 mass% or more, 90 mass% or more, 95 mass% or more, 98 mass% or more, or 99 mass% or more of the solvent contained in the composition is water (upper limit: 100 mass%).

Examples of the filler include an inorganic filler and organic filler other than the component (B) and component (C) of the present invention. Examples of the inorganic filler include silica, alumina, talc, calcium carbonate, glass, boron nitride, aluminum nitride, mica, and kaolin, among which silica, talc, or mica is preferable because the present invention has high fixing force while being an aqueous composition. Examples of the organic filler include polyethylene, polypropylene, polyamide, polystyrene, polycarbonate, and polytetrafluoroethylene resin, among which polytetrafluoroethylene resin is preferable. These fillers can be used alone or in a mixture of two or more thereof, and it is preferable to mix two or more thereof.

According to one embodiment of the present invention, the proportion of the filler contained in the composition is preferably 5 to 25 mass% or 10 to 20 mass%. According to one embodiment of the invention, the filler includes talc and mica. According to one embodiment of the present invention, the mass content of the talc is 1.2 to 4.0 times, 1.4 to 3.0 times, or 1.6 to 2.5 times the mass content of the mica. By increasing the content of talc than the content of mica, the fixing force can be increased because mica has a more slippery (layered structure), which reduces friction when tightened, and consequently tightens more strongly. On the other hand, it is preferable to contain talc in the following respects. For example, when a threaded member coated with an aqueous composition is used in an engine compartment of a vehicle or the like, it is exposed to a high-temperature environment. Even in such a high temperature environment, the strength (hot strength) of the cured product can be maintained by including talc in the aqueous composition for coating a threaded member.

According to one embodiment of the present invention, 80 mass% or more, 90 mass% or more, 95 mass% or more, 98 mass% or more, or 99 mass% or more of the inorganic filler contained in the composition is composed of at least one of talc and mica (upper limit: 100 mass%).

The polytetrafluoroethylene resin acts as a coating film strength maintaining component in the aqueous composition for coating a threaded member of the present invention. The average particle size of the polytetrafluoroethylene resin is 0.1 to 100 µm, and 1 to 50 µm, although not particularly limited thereto. Examples of commercially available products of the polytetrafluoroethylene resin include, but are not particularly limited to, Lubron L5, Lubron L5F (all manufactured by Daikin Industries, Ltd.), TLP-10, TLP-10F-1 (all manufactured by Du Pont-Mitsui Fluorochemicals Co., Ltd., currently known as Mitsui-Chemie Fluoroproducts Co., Ltd.), Fluon L169, Fluon L170, Fluon L171, Fluon L173J (all manufactured by Asahi Glass Company, Limited, currently known as AGC Inc.), and KTL-20N, KTL-10N, KTL-8N, KTL-4N, KTL-2N, KTL-450, KT-600M, KTL-610, and KTL-620 (all manufactured by KITAMURA LIMITED).

Examples of the curing accelerator include ethylenethiourea, saccharin, N,N-dimethylaniline, N,N-dimethyl-p-toluidine, N,N-diethyl-p-toluidine, o-tolidine, p-tolyldiethanolamine, glycolic acid, lactic acid, malic acid, tartaric acid, citric acid, and maleic acid, among which ethylenethiourea, saccharin, N,N-dimethylaniline, N,N-dimethyl-p-toluidine, and p-tolyldiethanolamine are preferable because the present invention has high fixing force while being an aqueous composition. These can be used alone or in a mixture of two or more thereof. According to one embodiment of the present invention, the curing accelerator preferably contains an aromatic amine such as p-tolyldiethanolamine. According to one embodiment of the present invention, 80 mass% or more, 90 mass% or more, 95 mass% or more, or 99 mass% or more of the curing accelerator is composed of aromatic amine (upper limit: 100 mass%). According to one embodiment of the present invention, 80 mass% or more, 90 mass% or more, 95 mass% or more, or 99 mass% or more of the aromatic amine is composed of p-tolyldiethanolamine (upper limit: 100 mass%).

According to one embodiment of the present invention, the aromatic amine has an alkylphenyl group and a hydroxyalkyl group. The number of carbon atoms of alkyl in the alkylphenyl group is preferably 1 to 4 or 1 to 3. The number of carbon atoms of alkyl in the hydroxyalkyl group is preferably 1 to 4 or 1 to 3.

According to one embodiment of the present invention, the curing accelerator (in particular, aromatic amine) is contained in the composition in an amount of 0.01 to 5 mass%, 0.05 to 3 mass%, 0.1 to 1 mass%, or 0.1 to 0.8 mass%.

The aqueous composition for coating a threaded member is formed by appropriately adjusting the amount of each component so that the total is 100 mass%.

### <Method for producing aqueous composition for coating a threaded member>

A method for producing an aqueous composition for coating a threaded member is not particularly limited as long as the aqueous composition contains component (A): an aqueous binder; and component (B): an aqueous emulsion containing a fluorescent pigment and having a surface tension of 15.5 to 80 mN/m. However, the aqueous composition for coating a threaded member can be obtained, for example, by separately preparing a curable composition containing component (A): an aqueous binder or a non-curable composition containing component (A): an aqueous binder, and mixing the curable composition or the non-curable composition with the aqueous emulsion containing component (B): a fluorescent pigment and having a surface tension of 15.5 to 80 mN/m using an appropriate mixing device, such as a three-one mixer.

According to one aspect of the present invention, component (A): an aqueous binder is mixed with component (B): an aqueous emulsion containing a fluorescent pigment and having a surface tension of 15.5 to 80 mN/m, thereby forming an aqueous composition for coating a threaded member. One aspect of the present invention also provides an aqueous composition for coating a threaded member which is obtained by mixing component (A): an aqueous binder with component (B): an aqueous emulsion containing a fluorescent pigment and having a surface tension of 15.5 to 80 mN/m. The description above can be applied to a description concerning the aqueous composition for coating a threaded member.

### <Use>

The aqueous composition for coating a threaded member of the present invention is preferably used for a threaded member because the composition can attain high visibility with excellent fixing force while being an aqueous composition.

### <Threaded member>

Another mode of the present invention relates to a threaded member on which an aqueous composition for coating a threaded member is applied. That is, it can be said that the above mode relates to a threaded member on which at least a part of the threaded portion is covered with a coating of the aqueous composition for coating a threaded member. As used herein, "coated with the aqueous composition for coating a threaded member" means "coated with a dried film formed by an aqueous composition for coating a threaded member". As the threaded member, it is preferable that 50% or more of the surface area of the threaded portion is covered with a coating of the aqueous composition for coating a threaded member, and more preferably, the entire threaded portion is covered. The whole of the threaded member including the threaded portion may be covered with a coating of the aqueous composition for coating a threaded member.

Examples of the threaded member include, but are not particularly limited to, a screw, a bolt, a nut, and a machine screw. Examples of the material of the threaded member include, but are not particularly limited to, iron, aluminum, gold, stainless steel, and SUS, and these materials may be subjected to plating treatment such as zinc plating chromate treatment.

In the present specification, regarding the conditions of the drying step at the time of preparing a threaded member on which an aqueous composition for coating a threaded member is applied, the temperature is preferably 15 to 150°C and more preferably 20 to 120°C, although not particularly limited thereto. In addition, the time is preferably 1 to 300 minutes, more preferably 3 to 120 minutes, and still more preferably 5 to 60 minutes, although not particularly limited thereto.

The present invention also provides a cured product which is obtained by drying and/or curing the aqueous composition for coating a threaded member, as well as a threaded member coated with the cured product.

The present invention is described in more detail below with reference to Examples, but the present invention is not limited to these Examples. Unless otherwise specified, operations, tests, and the like were performed in an environment of 25°C and 55% RH.

### Examples

Evaluation and/or examination were performed in Examples and Comparative Examples.

### <Preparation of aqueous composition for coating a threaded member>

Each of the components listed in Table 1 was collected in part(s) by mass as shown in Table 1 and mixed with a three-one mixer for 30 minutes to obtain an aqueous composition for coating a threaded member. Note that detailed addition amounts are as shown in Table 1, and all values are expressed in parts by mass.

### <Method for producing microcapsule encapsulating a curable compound>

The following compounds were mixed together:
100 parts by mass of an ethoxy-modified (average addition mole number of n + m = 2.3) bisphenol A-type epoxy dimethacrylate (BPE 80N, manufactured by SHIN-NAKAMURA CHEMICAL Co., Ltd.) represented by the following formula:

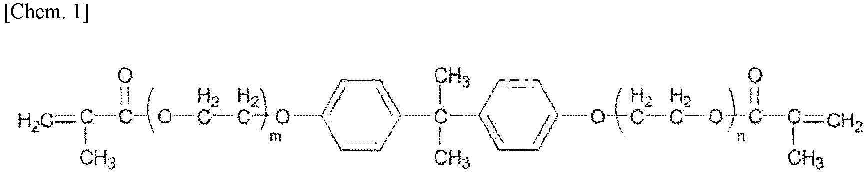

   and
100 parts by mass of 1,6-hexanediol diacrylate (Light Acrylate 1.6HX-A, manufactured by Kyoeisha Chemical Co., Ltd.) represented by the following formula: 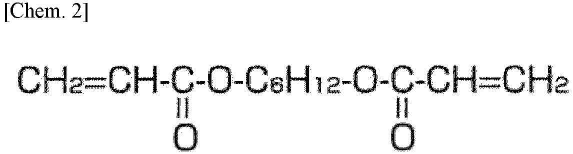
to 90 parts by mass of the mixture was added 10 parts by mass of a biuret-modified product of methylene diisocyanate (Desmodur N 3200, manufactured by Sumitomo Bayer Urethane Co., Ltd., currently known as Sumika Covestro, Urethane Co., Ltd.) represented by the following formula as a microcapsule wall material, followed by mixing and stirring:

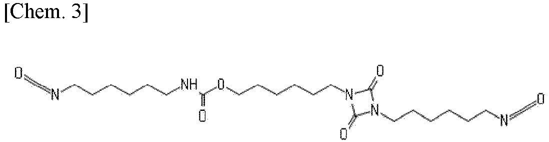

Next, 130 parts by mass of the mixture were added to 100 parts by mass of a 4% aqueous solution of an isobutylene-maleic acid copolymer and mixed under these acidic conditions to form a dispersion. Then, 53 parts by mass of a 50% aqueous solution of a melamine-formaldehyde initial condensate (Nikaresin, manufactured by Nippon Carbide Industries Co., Inc.) was added dropwise thereto, followed by continued mixing and stirring. Thereafter, the mixture was dried to produce a microcapsule encapsulating a curable compound as component (D). Note that the microcapsule encapsulating the curable compound had an average particle size of 150 µm.

### <Method for producing base liquid>

As a liquid serving as a base for dispersing the microcapsule (hereinafter also referred to as a "base liquid" in the present specification), a base liquid (112.4 parts by mass) was obtained by adding the following substances to ion-exchange water (50 parts by mass) serving as a dispersion medium, followed by mixing and stirring:
30 parts by mass (= 12.9 parts by mass of solids = about 28.71 mass% of the total solids in the base liquid) of an acrylic-styrene copolymer emulsion (Polyzol AP 3160A, manufactured by Showa Denko K.K., currently known as Resonac Holdings Corporation), having a solids content of 43%, as component (A);
0.4 parts by mass of p-tolyldiethanolamine (about 0.89 mass% of the total solids in the base liquid) as a curing accelerator;
20 parts by mass of talc (about 44.5 mass% of the total solids in the base liquid) as a filler;
10 parts by mass of mica (about 22.3 mass% of the total solids in the base liquid) as a filler;
1 part by mass (about 2.2 mass% of the total solids in the base liquid) of a rheology control agent (urea urethane oligomer); and
1 part by mass (= 0.62 parts by mass of solids = about 1.4 mass% of the total solids in the base liquid) of a cobalt blue colorant (MF-5460 (made of a composite oxide), manufactured by Dainichiseika Color & Chemicals Mfg. Co., Ltd.) dispersed in water with a solid content of 62 mass% as component (C).

### <Method for producing curable composition>

Next, a method for producing the curable composition shown in Table 1 is described.

A curable composition (247 parts by mass) was obtained by adding and uniformly mixing the following components with stirring:
140 parts by mass of the base liquid containing the component (A) and the component (C) (solid content of the component (A): about 16.07 parts by mass, and solid content of the component (C): about 0.77 parts by mass);
100 parts by mass of microcapsules (average particle size: 30 µm) encapsulating the curable compound as component (D); and
7 parts by mass of microcapsules encapsulating a curing agent, the microcapsules containing benzoyl peroxide as a curing agent and including a wall material composed of a urea-resorcin-formaldehyde reaction product as a shell (5.95 parts by mass of benzoyl peroxide and 1.05 parts by mass of the wall material (urea wall film agent) in 7 parts by mass) as component (E).

That is, about 6.51 parts by mass of solids of the component (A), about 0.32 parts by mass of solids of the component (C), about 40.49 parts by mass of the component (D), and about 2.83 parts by mass of the component (E) are contained in 100 parts by mass of the curable composition (where the amount of the curing agent in the component (E) is about 2.41 parts by mass).

### <Method for producing non-curable composition>

Next, a method for producing the non-curable composition shown in Table 1 is described.

A non-curable composition (146 parts by mass) was produced by adding and uniformly mixing the following components with stirring:
59 parts by mass of polytetrafluoroethylene having an average particle size of 15 µm (KT-600M, manufactured by Kitamura Limited) as a filler;
36 parts by mass of an acrylic-styrene copolymer emulsion with a solid content of 43% (Polysol AP-3160A, manufactured by Showa Denko K.K.) as a binder for the component (A);
50 parts by mass of ion-exchange water;
1 part by mass of titanium oxide (= 0.99 parts by mass of solids) (the remaining 0.1 parts by mass is composed of H₂O) with a solid content of 99% by mass as a colorant for the component (C).

That is, about 10.6 parts by mass of solids of the component (A) and about 0.68 parts by mass of solids of the component (C) are contained in 100 parts by mass of the non-curable composition.

### <Component (B) and Comparative Component>

B1: Aqueous emulsion-type organic fluorescent pigment including a resin particle having an average particle size of 0.1 µm and containing a substance that emits fluorescent green (surface tension: 16.7 mN/m, solid fraction: 36.4 mass%, viscosity: 17.3 mPa·s, and pH: 5.27) (MLCB12, manufactured by Shinloihi Co., Ltd.)
B2: Aqueous emulsion-type organic fluorescent pigment fluorescent blue including a resin particle having an average particle size of 0.1 µm and containing a substance that emits fluorescent blue (surface tension: 24.8 mN/m, solid fraction: 36.2 mass%, viscosity: 13.6 mPa·s, and pH: 5.11) (MLCB18, manufactured by Shinloihi Co., Ltd.)
B'1: Aqueous emulsion-type organic fluorescent pigment fluorescent red including a resin particle having an average particle size of 0.1 µm and containing a substance that emits fluorescent red (surface tension: 15.2 mN/m, solid fraction: 36.8 mass%, viscosity: 15.0 mPa·s, and pH: 5.32) (MLCB13, manufactured by Shinloihi Co., Ltd.).

Note that the surface tension is measured by a plate method.

Next, evaluation and examination were performed in Examples and Comparative Examples as follows.

### <Method of preparing threaded member>

A threaded surface of a SS41 hexagonal bolt (M10 × P1.5) conforming to JIS B 1180:2014 was immersed in each of Examples and Comparative Examples, only a tip of the threaded surface was washed with clean water, and then the bolt was left to stand still for 1 hour at room temperature in a state where a head portion of the bolt was held on an upper side, and an excessive composition liquid was dropped. The bolt was further left to stand still in a thermostatic bath at 80°C for 20 minutes to volatilize and dry volatile components, thereby producing a bolt having a threaded surface on which a coating of the composition was formed (hereinafter, also referred to as a "coating-formed bolt").

The characteristics of the coating-formed bolt produced by the above method was evaluated by the following testing method.

### <Visual confirmation in fluorescent light environment>

The appearance of each coating-formed bolt was evaluated by visually confirming coloring performance under a fluorescent light environment. The results are shown in Table 1 for the color of the appearance.

### <Fluorescent coloring performance confirmation>

Each of the coating-formed bolts was irradiated with ultraviolet light (365 nm) using an ultraviolet light irradiation device (CHROMATO-VUE, manufactured by ULTRA-VIOLET PRODUCTS Co., Ltd.), and the fluorescent coloring performance of the test piece was visually evaluated based on the following evaluation criteria. The results are shown in Table 1. In the present invention, "Good" or "Excellent" is preferable.

### [Evaluation result]

Excellent: Strong fluorescence was observed.
Good: Weak fluorescence was observed.
Bad: No fluorescence was observed.

### <Fixing force>

A plain washer (a product corresponding to JIS B 1256:2008, M10) was passed through the coating-formed bolt coated with each of Examples 1 and 2 and Comparative Examples 1 and 2, and a nut compatible with the plain washer (a nut compatible with JIS B 1181:2014, manufactured by SS41, M10) was fastened with a fastening torque of 30 N·m to cause destruction of the microcapsules and a curing reaction accompanying the destruction. The bolt was then allowed to stand at room temperature for 24 hours to prepare a test piece for evaluation of the fixing force.

The bolt head portion of the test piece was set in a screw tightening measuring machine (NST-100NM, manufactured by Nihon Keisoku System Co., Ltd.), the nut was rotated in the loosening direction, and the torque (breaking torque) at the time when the nut started to move for the first time was measured as the fixing force and evaluated based on the evaluation criteria. The results are shown in Table 1. In the present invention, the breaking torque is preferably 35 N·m or more, more preferably 37 N·m or more, still more preferably 40 N·m or more, and even more preferably 45 N·m or more. Note that the term "not measured" in the table means that this evaluation was not performed.

**[Table 1]**

| | Example 1 | Example 2 | Comparative Example 1 | Comparative Example 2 | Example 3 | Example 4 | Comparative Example 3 | Comparative Example 4 |
|---|---|---|---|---|---|---|---|---|
| Curable composition | 100 | 100 | 100 | 100 | | | | |
| Non-curable composition | | | | | 100 | 100 | 100 | 100 |
| B1 | 0.5 | | | | 0.5 | | | |
| B2 | | 0.5 | | | | 0.5 | | |
| B'1 | | | | 0.5 | | | | 0.5 |
| Mass% of solids of component (A) relative to whole composition | 6.5wt% | 6.5wt% | 6.5wt% | 6.5wt% | 10.5wt% | 10.5wt% | 10.5wt% | 10.5wt% |
| Mass% of solids of component (B) relative to whole composition | 0.2wt% | 0.2wt% | 0.0wt% | 0.2wt% | 0.2wt% | 0.2wt% | 0.0wt% | 0.2wt% |
| Amount (parts by mass) of solids of component (B) or (B') added relative to 10 parts by mass of solids of component (A) | 0.3 | 0.3 | 0.0 | 0.3 | 0.2 | 0.2 | 0.0 | 0.2 |
| Mass% of component (D) to whole composition | 40.5wt% | 40.5wt% | 40.5wt% | 40.5wt% | - | - | - | - |
| Mass% of component (E) to whole composition | 2.8wt% | 2.8wt% | 2.8wt% | 2.8wt% | - | - | - | - |
| Visual confirmation in fluorescent light environment | Blue | Blue | Blue | Blue | White | White | White | White |
| Fluorescent color confirmation | Excellent | Good | Bad | Bad | Good | Good | Bad | Bad |
| Fixing force N·m | 46.2 | 38.7 | 45.7 | 24.7 | Not measured | | | |

Examples 1 and 2 in Table 1 confirmed that the aqueous composition for coating a threaded member of the present invention can attain high visibility with excellent fixing force while being a curable aqueous composition. In addition, Examples 3 and 4 confirmed that the aqueous composition for coating a threaded member of the present invention can attain high visibility while being a non-curable, aqueous composition.

Comparative Example 1 in Table 1, an aqueous composition for coating a threaded member without the component (B) of the present invention, was found to be inferior in visibility. Comparative Example 2, an aqueous composition for coating a threaded member containing component B'1, which is different from the component (B) of the present invention, was found to be inferior in both visibility and fixing force. Comparative Example 1, an aqueous composition for coating a threaded member without the component (B) of the present invention, was found to be inferior in visibility. Comparative Example 3, an aqueous composition for coating a threaded member without the component (B) of the present invention, was found to be inferior in visibility. Comparative Example 4, an aqueous composition for coating a threaded member containing component B'1, which is different from the component (B) of the present invention, was found to be inferior in visibility.

As described above, the present invention provides an aqueous composition for coating a threaded member that can attain high visibility while being an aqueous composition by combining components (A) and (B) in this invention.

### Industrial Applicability

The present invention is an aqueous composition for coating a threaded member that can attain high visibility while being an aqueous composition and is therefore useful for preventing leakage of encapsulated oil and fat, gas, water, and the like when applied to a member having a threaded portion such as a screw, a bolt, a nut, or a machine screw.

Note that the present application is based on Japanese Patent Application No. 2022-199774, filed on Dec. 14, 2022, the disclosure of which is incorporated herein by reference in its entirety.

## Claims

1. An aqueous composition for coating a threaded member, comprising:
component (A): an aqueous binder; and
component (B): an aqueous emulsion containing a fluorescent pigment and having a surface tension of 15.5 to 80 mN/m.

2. The aqueous composition for coating a threaded member according to claim 1, wherein the component (B) is an aqueous emulsion comprising a resin particle containing a substance that emits fluorescent green or fluorescent blue light.

3. The aqueous composition for coating a threaded member according to claim 1 or 2, wherein the component (A) is at least one selected from the group consisting of a (meth)acrylic polymer emulsion, a (meth)acrylic-styrene copolymer emulsion, and an ethylene-vinyl acetate copolymer emulsion.

4. The aqueous composition for coating a threaded member according to claim 1 or 2, further comprising component (C): a non-fluorescent colorant.

5. The aqueous composition for coating a threaded member according to claim 1 or 2, further comprising component (D): a microcapsule encapsulating a curable compound.

6. The aqueous composition for coating a threaded member according to claim 5, further comprising component (E): a microcapsule encapsulating a curing agent.

7. The aqueous composition for coating a threaded member according to claim 1 or 2, wherein an amount of solids of the component (B) added is 0.05 to 10 parts by mass relative to 10 parts by mass of solids of the component (A).

8. The aqueous composition for coating a threaded member according to claim 1 or 2, wherein the component (B) has a viscosity of 14 mPa·s or more.

9. The aqueous composition for coating a threaded member according to claim 8, wherein the component (B) has a pH of 5.15 to 5.30.

10. The aqueous composition for coating a threaded member according to claim 9, comprising talc and mica.

11. The aqueous composition for coating a threaded member according to claim 10, wherein a mass content of the talc is 1.2 to 4.0 times a mass content of the mica.

12. A cured product obtained by drying and/or curing the aqueous composition for coating a threaded member according to claim 1 or 2.

13. A threaded member at least partially coated with the aqueous composition for coating a threaded member according to claim 1 or 2.

14. A threaded member at least partially coated with the cured product according to claim 12.

15. An aqueous composition for coating a threaded member, which is obtained by mixing component (A): an aqueous binder with component (B): an aqueous emulsion containing a fluorescent pigment and having a surface tension of 15.5 to 80 mN/m.
